(19) Europäisches Patentamt
European Patent Office
Office européen des brevets

(11) EP 1 979 385 B1

(12) EUROPEAN PATENT SPECIFICATION

(45) Date of publication and mention
of the grant of the patent:
20.04.2011 Bulletin 2011/16

(51) Int Cl.:
C08F 210/02 (2006.01)   C08F 4/78 (2006.01)

(21) Application number: 07702986.6

(22) Date of filing: 24.01.2007

(86) International application number:
PCT/EP2007/000578

(87) International publication number:
WO 2007/088001 (09.08.2007 Gazette 2007/32)

(54) **COPOLYMERS OF ETHYLENE AND AT LEAST ONE OTHER 1-OLEFIN, AND PROCESS FOR THEIR PREPARATION**

COPOLYMERE VON ETHYLEN UND MINDESTENS EINEM ANDEREN 1-OLEFIN UND HERSTELLUNGSVERFAHREN DAFÜR

COPOLYMERES D'ETHYLENE ET D'AU MOINS UNE AUTRE 1-OLEFINE ET LEUR PROCEDE DE FABRICATION

(84) Designated Contracting States:
AT BE BG CH CY CZ DE DK EE ES FI FR GB GR HU IE IS IT LI LT LU LV MC NL PL PT RO SE SI SK TR

(30) Priority: 31.01.2006 DE 102006004672
14.03.2006 US 782094 P

(43) Date of publication of application:
15.10.2008 Bulletin 2008/42

(73) Proprietor: Basell Polyolefine GmbH
50389 Wesseling (DE)

(72) Inventors:
• KIENER, Christoph
67256 Weisenheim (DE)
• KARER, Rainer
67657 Kaiserlautern (DE)
• WIESECKE, Jens
69123 Heidelberg (DE)
• MEIER, Gerhardus
60320 Frankfurt am Main (DE)

(56) References cited:
WO-A-2005/103096      WO-A-2005/123793
WO-A1-2005/103095

Remarks:
The file contains technical information submitted after the application was filed and not included in this specification

**Description**

The invention relates to copolymers of ethylene and at least one other 1-olefin, and to a process for their preparation, and to their use as blow-molded products.

Ethylene polymers prepared using chromium catalysts are particularly suitable for production of blown films, and for blow molding, because they have good processing performance and good product properties.

However, products prepared with the aid of a chromium catalyst have disadvantageous comonomer distribution because most of the comonomer is incorporated within the low-molecular-weight fraction of the polymer. The result of this is major restrictions on product properties, in particular the stiffness, impact strength, and environmental stress cracking resistance (ESCR) relation.

Ethylene polymers with improved properties have hitherto been obtainable only by producing a relatively low-molecular-weight polymer component and a relatively high-molecular-weight polymer component within the polymer.

The simplest method of achieving this is to produce the two components separately and mix them with one another. As an alternative, the polymer components can be produced in series or in parallel in-situ. In series, this is achieved in a cascade process by preparing one of the polymer components in a first stage and preparing the second component in the subsequent stage. For this, substantial use is made of Ziegler catalysts, which have good hydrogen-controllability and therefore make it easy to adjust the molar mass within the stages. Chromium catalysts are substantially unsuitable for this purpose because they have insufficient hydrogen response. Finally, in relatively recent times attempts have been made to produce the relatively high-molecular-weight and relatively low-molecular-weight components by using what are known as hybrid catalysts. These generally comprise two or more catalyst components, which can produce the relatively high-molecular-weight and relatively low-molecular-weight polymer components in parallel.

Particularly good properties are obtained when the comonomer content of the relatively low-molecular-weight polymer component is minimized and the comonomer content of the relatively high-molecular-weight polymer component is maximized.

Although the cascade processes mentioned, or processes using hybrid catalysts, can adjust product properties very flexibly, the processes are complicated and expensive because of the need to produce at least two polymer components.

An object underlying the present invention was therefore to overcome the abovementioned disadvantages of the prior art and to provide a polyethylene which can be prepared simply and at low cost and which has good stiffness and environmental stress cracking resistance together with high impact strength, and to provide a process for its preparation.

Surprisingly, it has now been found that product properties hitherto restricted to the cascade process or to hybrid catalysts can now also be achieved with the aid of a chromium catalyst. According to the invention, the copolymers of ethylene and at least one other 1-olefin are polymers having a density from 0.940 to 0.955 g/cm$^3$, a vinyl end group content above 0.5 end groups, based on 1000 carbon atoms, a tensile impact strength $a_{tn}$, measured to ISO 8256 (1997) /1A at -30°C, greater than or equal to 145 kJ/m$^2$, and a content of comonomer side chains per 1000 carbon atoms $C_x$ above a value defined via equation I

$$C_x = 128.7 - 134.62 \cdot d', \qquad\qquad\qquad (I)$$

where d' is the density of the copolymer in g/cm$^3$.

According to the invention, the density of the ethylene copolymers is in the range from 0.940 g/cm$^3$ to 0.955 g/cm$^3$. Preference is given to densities of from 0.940 g/cm$^3$ to 0.952 g/cm$^3$, particularly from 0.940 g/cm$^3$ to 0.950 g/cm$^3$.

The ethylene copolymers moreover have a vinyl end group content above 0.5 end groups per 1000 carbon atoms. This type of end group content is specific for ethylene polymers prepared with the aid of a chromium catalyst. The content of vinyl end groups is considerably lower than this for products prepared either with a Ziegler catalyst or with a metallocene catalyst.

The tensile impact strength $a_{tn}$ of the products according to the present invention, measured to ISO 8256 (1997) /1A at -30°C, is greater than or equal to 145 kJ/m$^2$, preferably greater than or equal to 150 kJ/m$^2$, particularly preferably greater than or equal to 155 kJ/m$^2$.

Finally, at a prescribed density d, the ethylene copolymers have a comonomer content $C_x$ above a value defined via equation I. The term comonomer content in the present patent application always refers to the number of comonomer side chains per 1000 carbon atoms in the polymer. According to the invention, comonomer side chains are those side chains obtained via incorporation of the comonomer(s) in the polymerization reaction. For example, 1-butene forms ethyl side chains, or 1-hexene gives butyl side chains, within the main chain.

The comonomer content is preferably above a value defined via equation II

$$C_x = 159.0 - 166.34 \cdot d'. \qquad\qquad\qquad \text{(II)}$$

The comonomer content is particularly preferably above a value defined via equation III

$$C_x = 170.3 - 178.10 \cdot d'. \qquad\qquad\qquad \text{(III)}$$

The absolute upper and lower limits for content of comonomers is subject to restriction via the density range. In a preferred embodiment the comonomer content here is preferably above 0.5% by weight, in particular above 1% by weight. Comonomers that can be used are any of the conventional alkenes having terminal double bonds. It is preferable to use $C_3$-$C_8$ $\alpha$-olefins, in particular 1-butene, 1-pentene, 1-hexene and/or 1-octene. In one particularly preferred process, ethylene is copolymerized with 1-hexene or 1-butene.

The advantageous mechanical properties of the products according to the present invention can be achieved for the first time via polymerization of ethylene with appropriate comonomers in just a single reactor, using a single catalyst. This gives considerable financial advantages not only in plant construction costs but also in operating costs. The ethylene polymers have markedly higher comonomer content at the same density, because the catalyst has greater ability to incorporate comonomer. The result is markedly increased environmental stress cracking resistance for the same impact strength, or markedly improved impact strength for the same environmental stress cracking resistance. Other advantages are apparent from the following description of the present invention.

In one preferred embodiment, environmental stress cracking resistance is greater than or equal to 80 hours, more preferably greater than or equal to 100 hours, more preferably greater than or equal to 120 hours, more preferably greater than or equal to 130 hours, particularly preferably greater than or equal to 140 hours, measured as FNCT result to ISO 16770:2004 at a stress of 3.5 MPa.

The $MFR_{21}$ of the products according to the present invention, measured to ISO 1133 at 190°C and with a load of 21.6 kg, is generally from 0.01 to 200 g/10 min, preferably from 0.1 to 50 g/10 min, more preferably in the range from 0.5 to 15 g/10 min, more preferably in the range from 3 to 12 g/10 min, particularly preferably from 5 to 9 g/10 min.

The products preferably have a chromium content of at least 0.5 ppm. Use of a single chromium catalyst can achieve a monomodal molar mass distribution and a polydispersity $M_w/M_n$ of from 10 to 45, preferably from 12 to 35, more preferably from 13 to 32, particularly preferably from 15 to 30. For the purposes of the present invention, a monomodal polymer is a polymer whose molar mass distribution has only one maximum and only two inflections. The ethylene copolymer according to the present invention differs from bi- or multimodal products in that it particularly preferably comprises only one uniform polymer component, which can be prepared with the aid of a single catalyst in one reactor.

The present invention also provides a process for preparation of ethylene copolymers via polymerization of ethylene with at least one other $C_3$-$C_{12}$ 1-alkene using a chromium catalyst at temperatures of from 80 to 125°C and pressures of from 0.2 to 20 MPa, where the chromium catalyst is prepared via the steps comprising

a) preparing a hydrogel comprising silicon oxide,

b) drying the hydrogel to a residual liquid content below 50% by weight at from 200 to 600°C within a period of at most 300 seconds, with formation of a xerogel,

c) if appropriate, sieving the xerogel,

d) applying of from 0.01 to 5% by weight of a chromium salt that can be converted into chromium trioxide onto the xerogel,

e) calcining the solid obtained in d) at from 350 to 950°C under oxidative conditions.

The ethylene copolymers according to the present invention are obtainable for the first time via the process mentioned.

The process uses a chromium catalyst, also termed a Phillips catalyst.

In step a) of the preparation of the chromium catalyst, a hydrogel is first prepared comprising silicon dioxide, and this can involve a pure silica gel or a cogel composed of silicon dioxide and of at least one other metal oxide.

For the purposes of this invention, the term "hydrogel" means any of the hydrogels suitable for preparation of supports and based on starting materials comprising silicon, and the term "hydrogel" preferably means hydrogels based on silica. The proportion of a cogel is preferably less than 20% by weight, more preferably less than 10% by weight. Apart from these, it is also possible to use cogels with other metal compounds. Particularly suitable metal compounds are the oxides of the elements Mg, Ca, Sr, Ba, B, Al, P, Bi, Sc, Ti, V, Mn, Fe, Co, Ni, Cu, Zn, Zr, Nb, Mo, Ru, Rh, Pd, Hf, Ta and W and, if appropriate, one or more activators. Preference is given to an element selected from Mg, Ca, B, Al, P, Ti, V, Zr, and Zn. Further preference is given to the use of Ti, Zr, or Zn. Use of Ti is particularly preferred. In the cogels, the content of the elements mentioned is preferably from 0.1 to 20% by weight, more preferably from 0.3 to 10% by weight, particularly preferably from 0.5 to 5% by weight.

The solids content of the hydrogel particularly preferably consists in essence of silicon dioxide, i.e. no cogel is involved.

The water content of the hydrogel is preferably at least 80% by weight, preferably at least 90% by weight, based on the total weight of the hydrogel.

The silica hydrogel or silica cogel is preferably prepared via acidic or basic precipitation from water glass. The hydrogel is preferably prepared via introduction of a sodium water glass solution or potassium water glass solution into a stream of a mineral acid, e.g. sulfuric acid, subjected to rotation. The resultant silica hydrosol is then sprayed by means of a nozzle into a gaseous medium. The nozzle orifice used in this process gives, once the hydrosol has solidified in the gaseous medium, hydrogel particles whose average particle size can be varied in the range from by way of example 1 mm to 20 mm, via selection of the nozzle. The average particle size of the hydrogel particles is preferably in the range from 2 mm to 10 mm, preferably in the range from 5 mm to 6 mm.

There are other known processes in the prior art which can be used for preparation of the hydrogel, alongside the spraying of a hydrosol. By way of example, supports according to the invention can also be prepared using hydrogels, preferably silica hydrogels, which can be prepared in a manner known in the prior art, by way of example from silicon-containing starting materials, such as alkali metal silicates, alkyl silicates, and/or alkoxysilanes.

The size of hydrogel particles which can be used can vary widely, for example in ranges from a few micrometers to a few centimeters. The size of hydrogel particles which can be used is preferably in the range from 1 mm to 20 mm, but it is also possible to use what are known as hydrogel cakes. Hydrogel particles whose size is in the range ≤ 6 mm can be used advantageously. These are produced, by way of example, as by-product in the production of granular supports.

The hydrogels that can be prepared according to step a) are preferably substantially spherical. Hydrogels that can be prepared according to step a) also preferably have a smooth surface. The solids content of silica hydrogels that can be prepared according to step a) is preferably in the range from 10% by weight to 25% by weight, with preference in the region of 17% by weight, calculated as $SiO_2$.

By way of example, the method described in EP-A-0 535 516 can be used to prepare the hydrogel.

After formation of the particles, the hydrogel should be washed with water until the content of alkali metal ions present is below 0.1 % by weight, based on the weight of solids. The residual content of alkali metal ions is preferably below 0.05% by weight, particularly preferably below 0.01% by weight. Well known processes are used here to wash the hydrogel. The washing process preferably uses weakly ammoniacal water heated to from 50°C to 80°C, in a continuous countercurrent process. By way of example, atomic absorption spectroscopy can be used to determine residual sodium content.

According to one preferred embodiment, the hydrogel particles can optionally be subjected, prior to the washing process and/or after the washing process using the alkaline solution, to an aging step in the range from 1 hour to 100 hours, preferably in the range from 5 hours to 30 hours, and this can adjust pore volume, surface area, and/or average pore radius of the support.

Step a) can optionally be followed by grinding of the hydrogel to give a fine-particle hydrogel. It is preferable here that at least 5% by volume of the particles, based on the total volume of the particles, have a particle size in the range from > 0 μm to ≤ 3 μm; and/or that at least 40% by volume of the particles, based on the total volume of the particles, have a particle size in the range from > 0 μm to ≤ 12 μm, and/or that at least 75% by volume of the particles, based on the total volume of the particles, have a particle size in the range from > 0 μm to ≤ 35 μm. It is preferable that the hydrogel produced here is a fine-particle hydrogel whose solids content is in the range from > 0% by weight to ≤ 25% by weight, preferably in the range from 5% by weight to 15% by weight, with preference in the range from 8% by weight to 13% by weight, particularly preferably in the range from 9% by weight to 12% by weight, very particularly preferably in the range from 10% by weight to 11% by weight, calculated as oxide. It is particularly preferable that step b) produces a fine-particle silica hydrogel whose solids content is in the range from > 0% by weight to ≤ 25% by weight, preferably in the range from 5% by weight to 15% by weight, with preference in the range from 8% by weight to 13% by weight, particularly preferably in the range from 9% by weight to 12% by weight, very particularly preferably in the range from 10% by weight to 11 % by weight, calculated as $SiO_2$. The solids content is preferably adjusted via dilution, for example via addition of deionized water.

The hydrogel can be ground in a suitable mill, for example a pinned-disk mill or an impeller breaker, and the hydrogel is preferably wet-ground in a stirred ball mill. The hydrogel can be ground in one step and/or in one mill, or in two or more steps and/or in various mills. Before the hydrogel is finely ground it can undergo a preliminary comminution or preliminary grinding process.

In step b), the hydrogel is dried to a residual liquid content below 50% by weight, preferably below 30% by weight, particularly preferably below 15% by weight. The liquid can involve water and/or organic solvent present in the hydrogel via extraction of the water. The drying temperatures are from 200 to 600°C, preferably from 250 to 500°C, particularly preferably from 275 to 425°C. In one preferred variant, the drying process is carried out without prior extraction of the water via an organic solvent.

The conventional methods can be used to determine water content in the xerogel. It is preferably determined gravimetrically.

The drying process preferably takes place within a period of from 0.5 to 200 seconds, particularly preferably within a period of from 1 to 20 seconds.

The drying process can take place continuously or batchwise, preferably continuously. In one particularly preferred embodiment, the drying process takes place in a pneumatic dryer in which a countercurrent of hot air is passed over the hydrogel particles. EP-A-0 535 516 describes a process of this type.

The shape of the support particles in the form of xerogels is generally spheroidal. The desired average particle size of the supports after the drying process can be varied widely and can be adapted appropriately for the use of the supports. The average particle size of the supports can therefore by way of example be adjusted appropriately for various polymerization processes. The average particle size of the support particles is preferably in the range from 1 $\mu$m to 350 $\mu$m, preferably in the range from 30 $\mu$m to 150 $\mu$m, particularly preferably in the range from 40 $\mu$m to 100 $\mu$m.

The pore volume of support particles prepared by this process is preferably in the range smaller than 1.5 ml/g, with preference in the range smaller than 1.3 ml/g, particularly preferably in the range from 0.8 ml/g to 1.25 ml/g.

The pore diameter of the support particles prepared is preferably in the range smaller than 20 nm, with preference in the range smaller than 15 nm, particularly preferably in the range from 5 nm to 13 nm.

The surface area of the inorganic support can likewise be varied widely via the conditions, in particular temperature and residence time, in the drying process. It is preferable to produce particles whose surface area is in the range from 100 $m^2$/g to 1000 $m^2$/g, preferably in the range from 150 $m^2$/g to 700 $m^2$/g, and particularly preferably in the range from 200 $m^2$/g to 500 $m^2$/g. The specific surface area of the support particles is based on that surface area determined by means of nitrogen adsorption by the BET method.

The bulk density of the inorganic supports is preferably in the range from 250 g/l to 1200 g/l, and the bulk density can vary as a function of the water content of the support. The bulk density is preferably from 250 g/l to 600 g/l.

The support material can optionally be sieved in step c). It is preferable that the fractions above 315 $\mu$m are removed by sieving.

In step d), the support is doped with a chromium compound. Doping is well known to the person skilled in the art. Any of the known processes can be used for this doping process, preference being given here to doping from a solution in a solvent. The process described in PCT/EP2005/052681 is preferred when a co-support is involved. Here, the chromium is applied together with the other elements from a homogeneous solution onto the support.

In principle, any of the chromium compounds and compounds of the elements mentioned can be used here as long as their solubility in the solvent selected is sufficiently good to form a homogeneous solution, and as long as they are inert toward the solvent.

It is preferable to use chromium compounds whose valency is smaller than six, particular preference being given to Cr(III) compounds. Examples of these are chromium hydroxide, and also soluble salts of trivalent chromium with an organic or inorganic acid, e.g. acetates, oxalates, sulfates, or nitrates. Particular preference is given to salts of acids which on activation are substantially converted into chromium(VI) leaving no residue, an example being chromium (III) nitrate nonahydrate. Chelate compounds of chromium can also be used, examples being chromium derivatives of β-diketones, of β-ketoaldehydes, or of β-dialdehydes, and/or complexes of chromium, such as chromium(III) acetylacetonate or hexacarbonylchromium, or else organometallic compounds of chromium, such as bis(cyclopentadienyl)chromium(II), organic esters of chromic acid, or bis(arene)chromium(0).

All of the compounds that can be used of the elements mentioned apart from chromium are organic or inorganic compounds derived from the elements mentioned and having good solubility in the polar solvent selected. The compounds here also include chelates of the elements.

Particularly suitable solvents are any of the protic or aprotic polar solvents, preference being given to organic solvents. Organic protic solvents are particularly preferred. Polar solvents are solvents having a permanent dipole moment. The solvent preferably involves saturated, unsaturated, or aromatic organic liquids comprising heteroatoms of groups 15, 16, and 17.

A protic medium is a solvent or solvent mixture composed of from 1 to 100% by weight, preferably from 50 to 100% by weight and particularly preferably 100% by weight, of protic solvent or of a mixture composed of protic solvents, and of from 99 to 0% by weight, preferably from 50 to 0% by weight, and particularly preferably 0% by weight, of aprotic solvent or of a mixture composed of aprotic solvents, based in each case on the protic medium.

Examples of protic solvents are alcohols R'-OH, amines $NR^1_{2-x}H_{x+1}$, $C_1$-$C_5$ carboxylic acids, and aqueous inorganic acids, such as dilute hydrochloric acid or sulfuric acid, water, aqueous ammonia, or mixtures thereof, preferably alcohols R'-OH, where $R^1$, independently of each other, are $C_1$-$C_{20}$-alkyl, $C_2$-$C_{20}$-alkenyl, $C_6$-$C_{20}$-aryl, alkylaryl having from 1 to 10 carbon atoms in the alkyl radical and from 6 to 20 carbon atoms in the aryl radical, or $SiR^2_3$, and $R^2$, independently of each other, are $C_1$-$C_{20}$-alkyl, $C_2$-$C_{20}$-alkenyl, $C_6$-$C_{20}$-aryl, alkylaryl having from 1 to 10 carbon atoms in the alkyl radical and from 6 to 20 carbon atoms in the aryl radical, and x is 1 or 2. By way of example, the following groups can be used as R' or $R^2$: $C_1$-$C_{20}$-alkyl where the alkyl radical can be linear or branched, e.g. methyl, ethyl, n-propyl, isopropyl, n-butyl, isobutyl, tert-butyl, n-pentyl, n-hexyl, n-heptyl, n-octyl, n-nonyl, n-decyl, or n-dodecyl, 5- to 7-membered cycloalkyl which in turn can bear a $C_6$-$C_{10}$aryl group as substituent, e.g. cyclopropane, cyclobutane, cyclopentane, cyclohexane, cycloheptane, cyclooctane, cyclononane, or cyclododecane, $C_2$-$C_{20}$-alkenyl, where the alkenyl radical can be linear, cyclic, or branched, and the double bond can be internal or terminal, e.g. vinyl, 1-allyl, 2-allyl, 3-allyl, butenyl, pentenyl, hexenyl, cyclopentenyl, cyclohexenyl, cyclooctenyl, or cyclooctadienyl, $C_6$-$C_{20}$-aryl, where the aryl radical can have substitution by further alkyl groups, e.g. phenyl, naphthyl, biphenyl, anthranyl, o-, m-, p-methylphenyl, 2,3-, 2,4-, 2,5-, or 2,6-dimethylphenyl, 2,3,4-, 2,3,5-, 2,3,6-, 2,4,5-, 2,4,6- or 3,4,5-trimethylphenyl, or arylalkyl, where the arylalkyl radical can have substitution by further alkyl groups, e.g. benzyl, o-, m-, p-methylbenzyl, 1- or 2-ethylphenyl, where, if appropriate, it is also possible for two R' radicals or two $R^2$ radicals in each case to have bonding to give a 5- or 6-membered ring, and the organic radicals $R^1$ and $R^2$ can also have substitution by halogens, e.g. fluorine, chlorine, or bromine. Preferred carboxylic acids are $C_1$-$C_3$ carboxylic acid, such as formic acid or acetic acid. Preferred alcohols R'-OH are methanol, ethanol, 1-propanol, 2-propanol, 1-butanol, 2-butanol, 1-pentanol, 2-pentanol, 1-hexanol, 2-ethylhexanol, 2,2-dimethylethanol, or 2,2-dimethylpropanol, in particular methanol, ethanol, 1-propanol, 1-butanol, 1-pentanol, 1-hexanol, or 2-ethylhexanol. The water content of the protic medium is preferably smaller than 20% by weight.

Examples of aprotic solvents are ketones, ethers, esters, and nitriles, without restriction thereto.

Once the homogeneous solution has been prepared, the material is applied to a support with formation of a catalyst precursor, by bringing the solution into contact with the fine-particle inorganic support in a second step (b).

Finally, the doped support is calcined under oxidative conditions.

Temperatures at which the doped xerogel particles are calcined are in the range from 350 to 950°C, preferably from 400 to 850°C, more preferably from 400 to 750°C, more preferably from 450 to 700°C, more preferably from 480 to 650°C, particularly preferably from 500 to 600°C. Calcination is the thermal activation of the catalyst in an oxidizing atmosphere, unless otherwise stated, the chromium compound applied being converted completely or partially into the hexavalent state, i.e. being activated, to the extent that the chromium is not by this stage present in the hexavalent state. The selection of the calcination temperature is prescribed via the properties of the polymer to be prepared and the activity of the catalyst. It has an upper limit imposed via the sintering of the support and a lower limit imposed via inadequate activity of the catalyst. The calcination temperature is preferably below the sinter temperature by at least from 20 to 100°C. The effect of the calcinations conditions on the catalyst are in principle known and are described by way of example in Advances in Catalysis, Vol. 33, page 48 ff. The calcination process preferably takes place in an atmosphere comprising oxygen. The intermediate obtained from step b) or c) is preferably activated directly in the fluidized bed via replacement of the inert gas by an oxygen-containing gas and via an increase in the temperature to the activation temperature. An advantageous method here heats the material to the appropriate calcination temperature in a stream of gas which is anhydrous and comprises a concentration above 10% by volume of oxygen, for from 10 to 1000 minutes, in particular from 150 to 750 minutes, and then cools it to room temperature, giving the Phillips catalyst to be used according to the invention. There can also be an upstream or downstream calcination process under inert gas conditions, alongside the oxidative calcination process.

The activation process can take place in a fluidized bed and/or in a stationary bed. Thermal activation in fluidized-bed reactors is preferred.

The catalyst precursor can moreover be doped with fluoride. Doping with fluoride can take place during preparation of the support, or during application of the transition metal compounds, or during the activation process. In one preferred embodiment of the preparation of the supported catalyst, step (a) dissolves a fluorinating agent together with the desired chromium compound and, if appropriate, with the desired further metal compound, and applies this solution to the support.

After the calcination process there can, if appropriate, be reduction of the calcined precatalyst, for example by reducing gases, such as CO or hydrogen, preferably at from 350 to 950°C, in order to obtain the actual catalytically active species. However, the reduction reaction can also be delayed until the polymerization reaction has begun, where it can be carried out by reducing agents present in the reactor, e.g. ethylene, alkyl metal compounds, and the like.

The chromium catalysts comprise the element chromium, and, if appropriate, one or more of the elements selected from Mg, Ca, Sr, Ba, B, Al, Si, P, Bi, Sc, Ti, V, Mn, Fe, Co, Ni, Cu, Zn, Zr, Nb, Mo, Ru, Rh, Pd, Hf, Ta, and W, and, if appropriate, one or more activators. The elements mentioned can be a constituent of the hydrogel or can be applied via subsequent doping of the xerogel particles. It is preferable to use chromium catalysts in which no further transition metal, most preferable no element other than chromium is applied to the support. Further preference is given to no involvement of cogels of silicon with other elements.

The chromium content of the finished catalyst is usually in the range from 0.1 to 5% by weight, preferably from 0.5 to 4% by weight, particularly preferably from 1 to 3% by weight, based on the support.

The process can be carried out using any of the known industrial polymerization processes at temperatures in the range from 0 to 200°C, preferably from 25 to 150°C, and particularly preferably from 40 to 130°C, under pressures of from 0.05 to 10 MPa, and particularly preferably from 0.3 to 4 MPa. The polymerization reaction can take place batchwise or preferably continuously in one or more stages, but preference is given here to polymerization in one stage. Solution processes, suspension processes, stirred gas-phase processes, or fluidized-bed gas-phase processes can be used. Processes of this type are well known to the person skilled in the art. Among the polymerization processes mentioned, preference is given to gas-phase polymerization, in particular in fluidized-bed gas-phase reactors, solution polymerization, and suspension polymerization, in particular in loop reactors and in stirred-tank reactors.

One preferred polymerization process is a process in a gas phase which is horizontally or vertically stirred or fluidized.

Particular preference is given to gas-phase polymerization in at least one fluidized-bed gas-phase reactor in which the circulated reactor gas is introduced into the lower end of the reactor and removed again at its upper end. In the application for polymerization of 1-olefins, the circulated reactor gas usually involves a mixture composed of the 1-olefin to be polymerized, if desired of a molecular weight regulator, such as hydrogen, and of inert gases, such as nitrogen and/or lower alkanes. The velocity of the reactor gas has to be sufficiently high firstly to fluidize the loose bed of mixed solids composed of small-particle polymer located in the tube and serving as polymerization zone, and secondly to dissipate the heat of polymerization effectively (noncondensed mode). The polymerization reaction can also be carried out in what is known as the condensed or supercondensed mode, and in this process a portion of the circulated gas is cooled below the dew point and returned in the form of a two-phase mixture into the reactor in order to make additional use of the enthalpy of evaporation for cooling of the reaction gas.

In one particularly advantageous embodiment, the polymerization reaction takes place in a single reactor under substantially uniform conditions.

In fluidized-bed gas-phase reactors it is advisable to operate at pressures of from 0.1 to 10 MPa, preferably from 0.5 to 8 MPa, and in particular from 1.0 to 3 MPa. The cooling capacity also depends on the temperature at which the (co)polymerization reaction is carried out in the fluidized bed. It is advantageous for the process to operate at temperatures of from 30 to 160°C, particularly from 65 to 125°C, preferably using temperatures in the upper portion of this range for relatively high-density copolymers and preferably using temperatures in the lower portion of this range for relatively low-density copolymers. Polymerization at temperatures from 80 to 125°C is preferred.

The temperature during continuous operation of the reactor is particularly preferably within a range delimited by an upper envelope derived from equation IV

$$T_{RH} = 170 + \frac{6d'}{0.84 - d'} \qquad\qquad (IV)$$

and by a lower envelope derived from equation V

$$T_{RN} = 173 + \frac{7.3d'}{0.837 - d'} \qquad\qquad (V)$$

in which the variables are as follows:

$T_{RH}$    highest reaction temperature in °C
$T_{RN}$    lowest reaction temperature in °C
d'    density d of polymer to be prepared in $g/cm^3$.

According to this definition, therefore, the reaction temperature for preparation of a polymer of prescribed density d is not to exceed the value defined via equation IV and is not to be less than the value defined via equation V, but has to lie between these limiting values.

The property profile of the products according to the present invention makes them particularly suitable for production of blow-molded products. Particularly advantageous applications are those for bottles, canisters, tanks, and containers, in particular those whose volume is greater than 5 l. The present invention therefore also provides the use of the ethylene copolymers as blow-molded products, and provides blow moldings produced from the ethylene copolymers. In order to produce the products mentioned, the ethylene copolymer is melted in a blow-molding machine, and a preform is extruded, and is blown via introduction of gas to give the appropriate shape. The blow molding technique is well known to the person skilled in the art.

All of the documents mentioned are expressly incorporated in this application by way of reference. All of the ratios stated (%, ppm, etc.) in this application are based on weight, based on the total weight of the corresponding mixtures, unless otherwise stated.

The parameters used were determined in the following way:

Chromium content was determined photometrically by way of the peroxide complex.

The number of vinyl end groups was determined via IR spectroscopy. For this, an IR spectrum was measured on PE films of thickness 0.1 mm. These were produced via pressing for 15 min at 180°C. The method is described in detail in Macromol. Chem., Macromol. Symp. 5, 105-133 (1986).

The density of the polymer specimens was determined according to DIN EN ISO 1183-1, variant A.

Melt flow rate $MFR_2$, $MFR_{21}$ was determined according to ISO 1133 at a temperature of 190°C with a weight of 2.16 and, respectively, 21.6 kg.

Comonomer content $C_x$ of the polymer specimens, expressed as number of comonomer side chains per 1000 carbon atoms of the polymer chain, was determined by means of NMR spectroscopy. The NMR specimens were drawn off under inert gas and melted. The internal standard used in the $^1$H spectra and $^{13}$C NMR spectra was the solvent signals, and a calculation was used to convert to chemical shift based on TMS.

Environmental stress cracking resistance was determined as FNCT (full-notch creep test) according to ISO 16770:2004 at 80°C under tensile stress of 3.5 MPa. Test specimen B was produced from the pellets via pressing of a corresponding sheet.

Impact strength was determined as tensile impact strength according to ISO 8256 (1997) /1A at -30°C. The test specimen was produced from the pellets by pressing.

The invention is further illustrated below using examples but is not restricted thereto.

Examples

Example 1 (Preparation of catalyst)

A support was prepared as in example 1, No. 1.1 of EP-A-0 535 516.

The support thus obtained was then, in accordance with the specification in example 1, No. 1.2 of EP-A-0 535 516, treated with a solution of 4.1% by weight of chromium(III) nitrate nonahydrate. The chromium-doped support was then calcined under conditions in other respects identical with those in example 1, No. 1.2 of EP-A-0 535 516, at 550°C.

This gave a chromium catalyst whose chromium content was 1.0% by weight, whose pore volume was 1.1 ml/g, and whose specific surface area was 350 $m^2$/g.

Example 2 (Polymerization)

Ethylene was polymerized with 1-hexene in a fluidized-bed gas-phase reactor whose throughput was 50 kg/h. The chromium catalyst prepared in example 1 was used here. Table 1 gives the polymerization conditions for the three different polymerization runs.

Table 1

| Experimental run | 1 | 2 | 3 |
|---|---|---|---|
| Reactor temp. [°C] | 113 | 115 | 115 |
| $N_2$ [% by vol.] | 41 | 41 | 41 |
| Hexane [% by vol.] | 4.0 | 4.3 | 4.0 |
| Ethylene [% by vol.] | 54 | 54 | 55 |
| Hexene [% by vol.] | 0.27 | 0.23 | 0.18 |
| Productivity [g/g] | 5200 | 4900 | 5560 |
| $MFR_{21}$ [g/10 min] | 6.2 | 6.3 | 4.8 |

(continued)

| Experimental run | 1 | 2 | 3 |
|---|---|---|---|
| Intrinsic viscosity [dl/g] | 4.8 | 4.6 | 5.2 |
| $M_w$ [$10^3$ g/mol] | 368 | 332 | 455 |
| $M_w/M_n$ | 24.9 | 17.9 | 24.9 |
| Comonomer content [1/1000 C] | 2.1 | 2.2 | 1.9 |
| Density [kg/m$^3$] | 944.5 | 944.3 | 945.8 |
| FNCT [h] | 450 | 340 | 180 |
| Tensile impact strength $a_{tn}$[kJ/m$^2$] | 155 | 160 | 160 |

Polymers were obtained with improved impact strength and environmental stress cracking resistance, when comparison is made with those previously obtainable using chromium catalysts.

**Claims**

1. A copolymer of ethylene and at least one other 1-olefin having a density from 0.940 to 0.955 g/cm$^3$, a vinyl end group content above 0.5 end groups, based on 1000 carbon atoms, a tensile impact strength $a_{tn}$, measured to DIN EN ISO 8256 (1997) /1A at -30°C, greater than or equal to 145 kJ/m$^2$, and a content of comonomer side chains per 1000 carbon atoms $C_x$ above a value defined via equation I

$$C_x = 128.7 - 134.62 \cdot d', \qquad \text{(I)}$$

where d' is the density d of the copolymer in g/cm$^3$.

2. The ethylene copolymer according to claim 1, wherein the content of comonomer side chains per 1000 carbon atoms $C_x$ is above a value defined via equation II

$$C_x = 159.0 - 166.34 \cdot d' \qquad \text{(II)}.$$

3. The ethylene copolymer according to any of the preceding claims, wherein the $MFR_{21}$ is from 3 to 12 g/10 min, in particular from 5 to 9 g/10 min.

4. The ethylene copolymer according to any of the preceding claims, wherein the tensile impact strength $a_{tn}$, measured according to ISO 8256/1A at -30°C, is greater than or equal to 150 kJ/m$^2$, in particular greater than or equal to 155 kJ/m$^2$.

5. The ethylene copolymer according to any of the preceding claims, wherein the FNCT result, measured according to ISO 16770:2004 under a stress of 3.5 MPa, is greater than or equal to 80 hours.

6. The ethylene copolymer according to any of the preceding claims, wherein the chromium content is at least 0.5 ppm.

7. The ethylene copolymer according to any of the preceding claims, wherein the molar mass distribution is monomodal and $M_w/M_n$ is from 12 to 35.

8. A process for preparation of ethylene copolymers according to any of the preceding claims via polymerization of ethylene with at least one other $C_3$-$C_{12}$ 1-alkene using a chromium catalyst at temperatures of from 80 to 125°C and pressures of from 0.2 to 20 MPa, wherein the chromium catalyst is prepared via the steps comprising

   a) preparing a hydrogel comprising silicon oxide,

b) drying the hydrogel to a residual liquid content below 50% by weight at from 200 to 600°C within a period of at most 300 seconds, with formation of a xerogel,

c) if appropriate, sieving the xerogel,

d) applying of from 0.01 to 5% by weight of a chromium salt that can be converted via calcination into chromium trioxide,

e) calcining the solid obtained in d) at from 350 to 950°C under oxidative conditions.

9. The process according to claim 8, wherein the drying in step b) takes place within a period of from 0.5 to 200 s, in particular from 1 to 20 s.

10. The process according to claim 8 or 9, wherein the drying is carried out without prior extraction of the water via an organic solvent.

11. The process according to any of claims 8 to 10, wherein the pore volume of the chromium catalyst is below 1.5 ml/g.

12. The process according to any of claims 8 to 11, wherein the ethylene is copolymerized with at least one comonomer selected from 1-butene, 1-hexene, or 1-octene.

13. The process according to any of claims 8 to 12, wherein the chromium catalyst is activated at from 500 to 600°C.

14. The process according to any of claims 8 to 13, wherein the polymerization is conducted in at least one gas-phase reactor, in particular in at least one fluidized-bed gas-phase reactor.

15. The process according to any of claims 8 to 14, wherein the polymerization takes place in a single reactor under substantially uniform conditions.

16. The process according to any of claims 8 to 15, wherein the polymerization temperature during the continuous operation of the reactor is within a range delimited by an upper envelope derived from equation IV

$$T_{RH} = 170 + \frac{6d'}{0.84 - d'} \qquad\qquad (IV)$$

and by a lower envelope derived from equation V

$$T_{RN} = 173 + \frac{7.3d'}{0.837 - d'} \qquad\qquad (V)$$

in which the variables are as follows:

$T_{RH}$ highest reaction temperature in °C
$T_{RN}$ lowest reaction temperature in °C
d' density d of polymer to be prepared in $g/cm^3$.

17. The use of the ethylene copolymers according to any of claims 1 to 7 for blow-molded products.

18. A blow molding produced from ethylene copolymers according to any of claims 1 to 7.

**Patentansprüche**

1. Copolymer von Ethylen und mindestens einem anderen 1-Olefin mit einer Dichte von 0,940 bis 0,955 $g/cm^3$, einem Vinyl-Endgruppengehalt von über 0,5 Endgruppen, bezogen auf 1000 Kohlenstoffatome, einer gemäß DIN EN ISO 8256 (1997) /1A bei -30 °C gemessenen Schlagzugzähigkeit $a_{tn}$ größer als oder gleich 145 $kJ/m^2$, und einem Comonomer-Seitenkettengehalt pro 1000 Kohlenstoffatomen $C_x$ über einem durch die Gleichung I

$$C_x = 128{,}7 - 134{,}62 \cdot d' \qquad\qquad (I)$$

definierten Wert, worin d' die Dichte d des Copolymers in $g/cm^3$ ist.

2. Ethylen-Copolymer nach Anspruch 1, worin der Comonomer-Seitenkettengehalt pro 1000 Kohlenstoffatomen $C_x$ über einem durch die Gleichung II

$$C_x = 159{,}0 - 166{,}34 \cdot d' \qquad\qquad (II)$$

definierten Wert liegt.

3. Ethylen-Copolymer nach einem der vorangehenden Ansprüche, worin die $MFR_{21}$ von 3 bis 12 g/10 min, insbesondere von 5 bis 9 g/10 min beträgt.

4. Ethylen-Copolymer nach einem der vorangehenden Ansprüche, worin die gemäß ISO 8256/1A bei -30°C gemessene Schlagzugzähigkeit $a_{tn}$ größer als oder gleich 150 $kJ/m^2$, insbesondere größer als oder gleich 155 $kJ/m^2$ ist.

5. Ethylen-Copolymer nach einem der vorangehenden Ansprüche, worin das gemäß ISO 16770:2004 unter einer Spannung von 3,5 MPa gemessene FNCT-Ergebnis größer als oder gleich 80 Stunden ist.

6. Ethylen-Copolymer nach einem der vorangehenden Ansprüche, worin der Chromgehalt mindestens 0,5 ppm beträgt.

7. Ethylen-Copolymer nach einem der vorangehenden Ansprüche, worin die Molmassenverteilung monomodal ist und $M_w/M_n$ von 12 bis 35 beträgt.

8. Verfahren zur Herstellung von Ethylencopolymeren nach einem der vorangehenden Ansprüche über die Polymerisation von Ethylen mit mindestens einem anderen $C_3$- bis $C_{12}$-1-Alken mittels eines Chromkatalysators bei Temperaturen von 80 bis 125°C und Drücken von 0,2 bis 20 MPa, worin der Chromkatalysator über die folgenden Schritte hergestellt wird, umfassend:

   a) Herstellen eines Hydrogels, umfassend Siliziumoxid,
   b) Trocknen des Hydrogels als ein Restflüssigkeitsgehalt unter 50 Gew.-% bei von 200 bis 600 °C innerhalb einer Zeitdauer von höchstens 300 Sekunden, unter Bildung eines Xerogels,
   c) gegebenenfalls Sieben des Xerogels,
   d) Applizieren von 0,01 bis 5 Gew.-% eines Chromsalzes, das durch Kalzinierung in Chromtrioxid umgewandelt werden kann,
   e) Kalzinieren des in d) bei von 350 bis 950 °C unter Oxidationsbedingungen erhaltenen Feststoffs.

9. Verfahren nach Anspruch 8, worin das Trocknen in Schritt b) innerhalb einer Zeitdauer von 0,5 bis 200 s, insbesondere von 1 bis 20 s stattfindet.

10. Verfahren nach Anspruch 8 oder 9, worin das Trocknen ohne vorherige Extraktion des Wassers mithilfe eines organischen Lösungsmittels durchgeführt wird.

11. Verfahren nach einem der Ansprüche 8 bis 10, worin das Porenvolumen des Chromkatalysators unter 1,5 ml/g liegt.

12. Verfahren nach einem der Ansprüche 8 bis 11, worin das Ethylen mit mindestens einem aus 1-Buten, 1-Hexen oder 1-Octen ausgewählten Comonomer copolymerisiert wird.

13. Verfahren nach einem der Ansprüche 8 bis 12, worin der Chromkatalysator bei von 500 bis 600 °C aktiviert wird.

14. Verfahren nach einem der Ansprüche 8 bis 13, worin die Polymerisation in mindestens einem Gasphasenreaktor, insbesondere in mindestens einem Wirbelbett-Gasphasenreaktor durchgeführt wird.

**15.** Verfahren nach einem der Ansprüche 8 bis 14, worin die Polymerisation in einem Einzelreaktor unter im Wesentlichen gleichbleibenden Bedingungen stattfindet.

**16.** Verfahren nach einem der Ansprüche 8 bis 15, worin die Polymerisationstemperatur während des kontinuierlichen Betriebs des Reaktors sich in einem Bereich befindet, der durch eine von der Gleichung IV

$$T_{RH} = 170 + \frac{6d'}{0,84 - d'} \qquad \text{(IV)}$$

abgeleiten oberen Umhüllungskurve und durch eine von der Gleichung V

$$T_{RN} = 173 + \frac{7,3d'}{0,837 - d'} \qquad \text{(V)}$$

abgeleiteten unteren Umhüllungskurve begrenzt ist, worin die Variablen wie folgt sind:

$T_{RH}$ höchste Reaktionstemperatur in °C
$T_{RN}$ niedrigste Reaktionstemperatur in °C
$d'$ Dichte d des herzustellenden Polymers in g/cm$^3$.

**17.** Verwendung der Ethylencopolymere nach einem der Ansprüche 1 bis 7 für Blasformprodukte.

**18.** Blasformteil, hergestellt aus Ethylencopolymeren nach einem der Ansprüche 1 bis 7.


**Revendications**

**1.** Copolymère d'éthylène et d'au moins une autre 1-oléfine présentant une densité de 0,940 à 0,955 g/cm$^3$, une teneur en groupes terminaux vinyle supérieure à 0,5 groupe terminal, sur base de 1000 atomes de carbone, une résistance au choc-traction $a_{tn}$, mesurée selon la norme DIN EN ISO 8256 (1997)/1A à -30°C, supérieure ou égale à 145 kJ/m$^2$, et une teneur en chaînes latérales de comonomère, par 1000 atomes de carbone, $C_x$ supérieure à une valeur définie via l'équation I

$$C_x = 128,7 - 134,62 * d' \quad \text{(I)}$$

où d' est la densité d du copolymère en g/cm$^3$.

**2.** Copolymère d'éthylène selon la revendication 1, où la teneur en chaînes latérales de comonomère, par 1000 atomes de carbone, $C_x$ est supérieure à une valeur définie via l'équation II

$$C_x = 159,0 - 166,34 * d' \quad \text{(II)}.$$

**3.** Copolymère d'éthylène selon l'une quelconque des revendications précédentes, où le MFR$_{21}$ (melt flow rate - indice de fluidité à chaud en masse) vaut 3 à 12 g/10 min, en particulier 5 à 9 g/10 min.

**4.** Copolymère d'éthylène selon l'une quelconque des revendications précédentes, où la résistance au choc-traction $a_{tn}$, mesurée selon la norme ISO 8256/1A à -30°C, est supérieure ou égale à 150 kJ/m$^2$, en particulier supérieure ou égale à 155 kJ/m$^2$.

**5.** Copolymère d'éthylène selon l'une quelconque des revendications précédentes, où le résultat du FNCT (full notch creep test - essai sur éprouvette entièrement entaillée), mesuré selon la norme ISO 16770:2004 sous une contrainte de 3,5 MPa, est supérieur ou égal à 80 heures.

6. Copolymère d'éthylène selon l'une quelconque des revendications précédentes, où la teneur en chrome est d'au moins 0,5 ppm.

7. Copolymère d'éthylène selon l'une quelconque des revendications précédentes, où la distribution des masses molaires est monomodale et $M_w/M_n$ vaut 12 à 35.

8. Procédé pour la préparation de copolymères d'éthylène selon l'une quelconque des revendications précédentes via la polymérisation d'éthylène avec au moins un autre 1-alcène en $C_3$-$C_{12}$ avec utilisation d'un catalyseur à base de chrome à des températures de 80 à 125°C et à des pressions de 0,2 à 20 MPa, où le catalyseur à base de chrome est préparé via les étapes comprenant

    a) la préparation d'un hydrogel comprenant de l'oxyde de silicium,
    b) le séchage de l'hydrogel à une teneur en liquide résiduel inférieure à 50% en poids à 200 jusqu'à 600°C pendant un laps de temps d'au plus 300 secondes, avec formation d'un xérogel,
    c) le cas échéant, le tamisage du xérogel,
    d) l'application de 0,01 à 5% en poids d'un sel de chrome qui peut être converti via une calcination en trioxyde de chrome,
    e) la calcination du solide obtenu en d) à 350 jusqu'à 950°C sous des conditions oxydantes.

9. Procédé selon la revendication 8, où le séchage dans l'étape b) a lieu pendant un laps de temps de 0,5 à 200 s, en particulier de 1 à 20 s.

10. Procédé selon la revendication 8 ou 9, où le séchage est réalisé sans extraction préalable de l'eau via un solvant organique.

11. Procédé selon l'une quelconque des revendications 8 à 10, où le volume des pores du catalyseur à base de chrome est inférieur à 1,5 ml/g.

12. Procédé selon l'une quelconque des revendications 8 à 11, où l'éthylène est copolymérisé avec au moins un comonomère choisi parmi le 1-butène, le 1-hexène, ou le 1-octène.

13. Procédé selon l'une quelconque des revendications 8 à 12, où le catalyseur à base de chrome est activé à 500 jusqu'à 600°C.

14. Procédé selon l'une quelconque des revendications 8 à 13, où la polymérisation est réalisée dans au moins un réacteur à phase gazeuse, en particulier dans au moins un réacteur à phase gazeuse à lit fluidisé.

15. Procédé selon l'une quelconque des revendications 8 à 14, où la polymérisation a lieu dans un réacteur unique sous des conditions substantiellement uniformes.

16. Procédé selon l'une quelconque des revendications 8 à 15, où la température de polymérisation durant l'opération continue du réacteur se situe dans une plage délimitée par une enveloppe supérieure dérivée de l'équation IV

$$T_{RH} = 170 + \frac{6d'}{0,84 - d'} \quad (IV)$$

et par une enveloppe inférieure dérivée de l'équation V

$$T_{RN} = 173 + \frac{7,3d'}{0,837 - d'} \quad (V)$$

**EP 1 979 385 B1**

dans lesquelles les variables sont comme suit :

> $T_{RH}$ la température de réaction la plus haute en °C
> $T_{RN}$ la température de réaction la plus basse en °C
> d' la densité d du polymère à préparer en g/cm$^3$.

**17.** Utilisation des copolymères d'éthylène selon l'une quelconque des revendications 1 à 7 pour des produits moulés-soufflés.

**18.** Produit moulé-soufflé fabriqué à partir de copolymères d'éthylène selon l'une quelconque des revendications 1 à 7.

**14**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0535516 A

- EP 2005052681 W

**Non-patent literature cited in the description**

- *Macromol. Chem., Macromol. Symp.,* 1986, vol. 5, 105-133